Europäisches Patentamt

European Patent Office

Office européen des brevets

(11) Publication number: **0 365 338**
**A1**

## EUROPEAN PATENT APPLICATION

(21) Application number: 89310790.4

(22) Date of filing: 20.10.89

(51) Int. Cl.5: **F01L 1/34** , **F16D 3/10** ,
**F16H 1/32**

(30) Priority: 20.10.88 GB 8824613

(43) Date of publication of application:
25.04.90 Bulletin 90/17

(84) Designated Contracting States:
AT BE CH DE ES FR GB GR IT LI LU NL SE

(71) Applicant: FORD MOTOR COMPANY LIMITED
Eagle Way
Brentwood Essex CM13 3BW(GB)
(84) BE CH GB GR IT LI LU NL SE AT

Applicant: FORD FRANCE S. A.
B.P. 307
F-92506 Rueil-Malmaison Cédex(FR)
(84) FR

Applicant: FORD-WERKE
AKTIENGESELLSCHAFT
Werk Köln-Niehl Henry-Ford-Strasse
Postfach 60 40 02
D-5000 Köln 60(DE)
(84) DE

Applicant: FORD MOTOR COMPANY
County of Wayne
Dearborn, MI 48120(US)
(84) ES

(72) Inventor: Ma, Thomas Tsoi-Hei
1 Collingwood Road South Woodham
Ferrers
Chelmsford Essex(GB)

(74) Representative: Messulam, Alec Moses et al
A. Messulam & Co. 24 Broadway
Leigh on Sea Essex SS9 1BN(GB)

(54) Phase change mechanism.

(57) A phase change mechanism comprises concentric drive (18) and driven (14) members, and two gears (22,24) the first (22) being an internally toothed gear ring and the second (24) being an externally toothed gear of smaller diameter but having teeth of the same pitch as the teeth of the first gear which mesh with the internal teeth of the first gear ring (22) over only part of the circumference of the second gear (24). Each of the gears is coupled for rotation with a respective one of the drive and driven members, one of the gears (22) being mounted for rotation about the same axis as the drive and driven members (18,14) and the other (24) being journalled for rotation about an eccentric crank (26) serving as the actuating member, rotation of the crank (26) being effective to cause trochoidal movement of the gear (24) journalled thereon relative to the other gear (22) so as to bring about a phase shift between the drive and driven members.

II ⟶  ⟵ III

30
32
34
12
10
18

22
62
60
16
28
26
56
58
50
54
52
56
24
14

**FIG.1**

II ⟶ | ⟵ III

## PHASE CHANGE MECHANISM

The invention relates to a phase change mechanism for varying the phase of a driven member relative to a drive member. The invention can be used for the camshaft of an internal combustion engine and in particular to varying the relative phase of opening and closing of the inlet and exhaust valves in a dual overhead camshaft internal combustion engine.

The optimum times for opening and closing the inlet and exhaust valves in an internal combustion engine vary, inter alia, with engine speed. In any engine with fixed angles for opening and closing the valves for all engine operating conditions, the valve timing is a compromise which detracts from the engine efficiency in all but a limited range of operating conditions. For this reason, control systems have been proposed which vary the valve timing during engine operation.

In other control systems, variation of the valve timing has been proposed as a means for regulating the engine output power. For example, if the inlet valve is allowed to remain open for part of the compression stroke, the volumetric efficiency of the engine can be reduced. Such a system requires an even greater range of control over the phase of the camshaft and the control needs to be continuous over the full adjustment range.

Various proposals have been made for adjustment of the camshaft phase angle relative to the crankshaft but these systems have all been complex on account of the need to withstand the considerable torque fluctuations experienced by a camshaft during normal operation. The system must also supply the force required to rotate the camshaft against the resistance offered by the valve springs which need to be compressed.

Most of the prior art proposals employ a linear actuator to set the desired phase shift and they rely on converting the linear movement of the actuator into a rotary movement of the camshaft relative to its drive pulley or gear. One such example has been to include a helical gear on the camshaft and to move the helical gear axially to cause the phase of the camshaft to change. In a recent proposal (GB Appln. No. 8818680.4 filed by the present Applicants on 5 August, 1988) an axially displaceable spider is connected by lever arms to the camshaft and to the drive pulley which once again brings about a phase change as it is moved axially.

Such proposals have generally suffered from many important disadvantages. First, they can only bring about a limited degree of phase change, typically 15° at the camshaft, which is not sufficient for regulation of the engine output power.

Second, the phase change mechanism increases the length of the engine at its front end making it difficult to comply with the packaging constraints. Of course, the overall length of an engine can only be extended to the limit set by the size of the engine compartment and this problem is particularly severe in a vehicle with a transversely mounted engine. Lastly, it is necessary to incorporate a suitable electric, mechanical or hydraulic actuating system and, if mounted ahead of the phase change mechanism causes a still further protrusion at the front of the engine, and if mounted at the rear end of the engine calls for a rod or cable to pass along the entire length of the camshaft.

The present invention seeks to mitigate at least some of the foregoing disadvantages by providing a phase change mechanism wherein a phase change is brought about between a drive and a driven member by rotation, rather than linear movement, of an actuator.

According to the present invention, there is provided a phase change mechanism which comprises concentric drive and driven members, and two gears the first being an internally toothed gear ring and the second being an externally toothed gear of smaller diameter but having teeth of the same pitch as the teeth of the first gear which mesh with the internal teeth of the first gear over only part of the circumference of the second gear, each of the gears being coupled for rotation with a respective one of the drive and driven members, one of the gears being mounted for rotation about the same axis as the drive and driven members and the other being journalled for rotation about an eccentric crank serving as the actuating member, rotation of the crank being effective to cause trochoidal movement of the gear journalled thereon relative to the other gear so as to bring about a phase shift between the drive and driven members.

Preferably, the ring gear is mounted for concentric rotation with the drive member and the second gear is coupled to the driven member by a slider crank which permits some radial misalignment of the axis of the second gear relative to the axis of the driven member while ensuring that the second gear and the driven member rotate in unison.

The invention employs differential gearing, such as used in so called harmonic drives with flexsplines, to couple the drive and driven members. Flexsplines are not particularly suitable for use in a camshaft phase shift mechanism as they need to be long if they are to have the necessary flexibility and furthermore they do not lend themselves to applications subject to rapid torque reversal. However, the invention retains the advantages of high gearing ratios and of extreme stiffness (the actuating member cannot be reverse driven by applying torque between the drive and driven members).

The phase shift mechanism of the invention offers two important advantages over prior art proposals wherein linear actuation is employed to effect a phase change. The first is that the packaging problem mentioned above no longer arises and indeed the entire phase change mechanism can be housed in a pulley little wider than a conventional drive pulley for a camshaft. The second is that there is no inherent limit on the extent of the phase change that can be effected in either direction as the greater the number of revolutions of the actuating member, the greater the phase change between the drive and driven members. There are no unavoidable axial end stops or any other abutments to limit the extent of the phase change and the maximum degree of adjustment is in no way related to the physical dimensions of the phase changing mechanism.

The actuating system for bringing about a change in phase is required to rotate the eccentric crank only when a change in phase is required. If the drive and driven members are rotating with constant phase, the phase changing mechanism has no relatively moving parts and does not cause any frictional losses. When the phase is to be changed, the crank is driven for a selected number of revolutions and preferably a sensor is used to measure the resulting change in phase between the drive and driven members to permit closed loop control of the phase change mechanism.

The actuating system for rotating the crank may comprise a motor mounted on the drive members and energised through slip-rings. Alternatively, the motor may be stationary and coupled by a clutch to the crank of the phase changing mechanism. A particularly preferred actuating system for the phase change mechanism is described in British Patent Application No. 8824612.9 filed on 20 Ocotber, 1988.

The invention will now be described further, by way of example, with reference to the accompanying drawings, in which:

Figure 1 is section through a phase change mechanism and an actuating system,

Figure 2 is a section on line II-II in Figure 1, and

Figure 3 is a section on line III-III in Figure 1.

The illustrated embodiment is intended for changing the phase of an engine camshaft relative to the crank shaft. The camshaft 10 is generally conventional and is not shown in full in the drawings. A position sensor 12 is provided on the camshaft 10 in order to provide position feedback for control of the actuating system.

A hub 14 is secured to the camshaft 10 by means of a bolt 16. The coupling between the hub 14 and the camshaft 10 may rely exclusively on friction, in the interest of continuous setting or a key may be provided between the two, if preferred to avoid accidental slippage. The drive pulley 18 which is driven by a timing belt or a timing chain is freely journalled for rotation about the outer periphery of the hub 14, by means of sliding or rolling bearings (not shown).

The hub 14 is coupled to the pulley 18 by means of differential gears. An internally toothed gear ring 22 is secured concentrically with the drive pulley 18. A second gear 24 of smaller diameter than the gear ring 22 is freely journalled about an eccentric actuator 26 and meshes with the gear ring 22 on only one side, the teeth on the other side being clear of one another by virtue of the eccentric position of the gear 24. The actuator 26 has a hollow spindle 28 by means of which it can be driven relative to the gear 24.

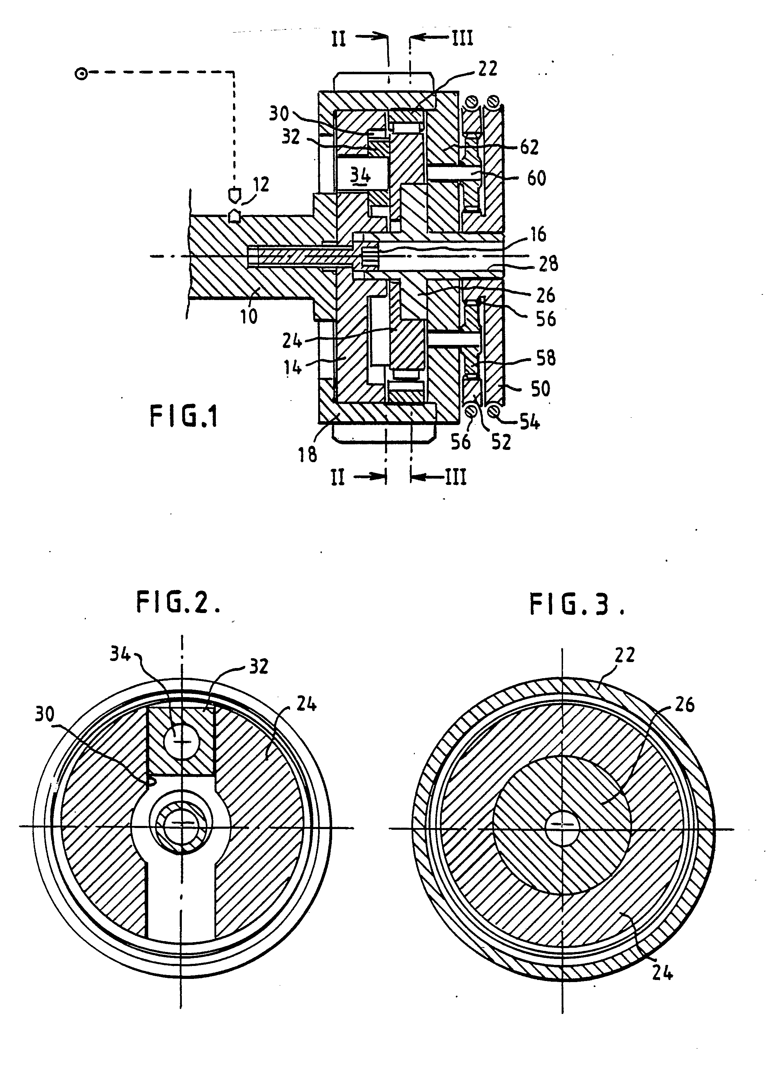

On one face of the gear 24, there is machined a guide groove 30 (see Figure 2) which receives a slider block 32 in turn journalled on a pin 34 which is fastened to the hub 14.

The effect of rotating the eccentric actuator 26 is to cause the gear 24 to roll around the inner surface of the gear ring 22 secured to the drive pulley 18, each full rotation of the eccentric actuator 26 causing the rotation of the gear 24 about its own axis relative to the drive pulley 18 by an amount equal to the difference in the number of teeth on the two intermeshing sets of teeth.

In the absence of rotation of the eccentric actuator 26 relative to the gear 24, the drive pulley 18, the gear ring 22, the gear 24, the slider 32, the pin 34, the hub 14 and the camshaft 10 all rotate in unison torque thus being transmitted from the drive pulley 18 to the camshaft 10.

If the actuator 26 is made to turn relative to the gear 24, and this can be done either by braking the actuator 26 and allowing the gear 24 to overtake it or by making the actuator 26 turn faster than the gear 24, then the relative motion causes the gear 24 to roll as previously described, following what is termed a trochoidal path, causing the gear 24, and with it the slider block 32, the pin 34, the hub 14 and the camshaft 10, to rotate relative to the drive pulley 18 and thereby introduce the desired phase change.

The actuating system for the actuator 26 comprises two reaction members 50 and 52 each associated with a respective brake band 54 and 56. The reaction member 50 is a wheel fast in rotation with the actuator spindle 28. When the wheel 50 is braked by its band 54, it slows down the rotation of the actuator 26 to bring about a phase shift in one sense of the camshaft 10 relative to the drive pulley 18.

The second reaction member 52 is the ring gear of a planetary gear set comprising a sun gear 56 and planet gears 58. The sun gear 56 of the planetary gear set is secured to the spindle 28 and can conveniently be formed integrally with the reaction member 50. The planet gears journalled on pins 60 secured to a cover plate 62 fastened to the drive pulley 18. It can be seen that the drive pulley 18 and the hub 14 together form a self-enclosed and self-supporting assembly that can be mounted on the camshaft 10 as a complete sub-assembly using the bolt 16.

In the brake band 56 is applied to brake the second reaction member 52, when the planet gears 58 are rotated by the pulley 18, through the cover 62 and their pins 60, they will drive the sun gear 56 and hence the spindle 28 faster than the speed of the pulley and the gear 24 and this will bring about a phase change in the opposite sense of the pulley 28 relative to the cam shaft 10.

In the absence of braking, there is no tendency for either reaction member to rotate at a speed different from that of the phase change mechanism and consequently release of the two brake bands will maintain the prevailing setting of the phase angle.

The torque for causing a phase change is in all cases derived from the engine output power and this affords ample power to permit very fast setting of the phase angle. Furthermore, the minimum number of engine cycles required for a given phase change is constant over the entire engine speed range. Of course, the minimum time required for a given phase change to be achieved occurs under maximum braking of the reaction member and should this rate of phase change be excessive then it can be reduced by applying the brake bands 54 and 56 more gently and allowing some slippage.

There is no simple direct relationship between the operation of the brake bands and the resulting phase shift. To control the actuating mechanism, one therefore needs to resort to a form of negative position feedback in which the actual phase of the camshaft is measured and compared with its desired phase to develop an error signal. The error signal, depending on its sign, is then applied to one or other of the two brake bands to set the value of the phase at the desired level. It is for this reason that a position sensor 12 is included in the camshaft 10. Of course, it is possible to incorporate some form of position sensor on the hub 14 in order to avoid modification to an existing camshaft 10.

If desired, the interior space defined by the hub 14, the pulley 18, the cover 62 and the spindle 28 can be totally contained using suitable seals and can be filled with oil so that the entire device may be self-lubricating. The moving elements outside this sealed enclosure, are only under light load because of the very high gear ratio of the differential gearing so that they my be lubricated by grease of by being made from a self lubricating plastics material.

The brakes for the reaction members may be continuous brake bands, as can be found in automatic gearboxes, brake shoes operated by a calliper of the twin leading or single leading variety, or disc brakes. In all cases, the brakes are to one side of the reaction member and not in line with the camshaft, so that the length of the engine (the most critical dimension) is not increased.

The preferred embodiment described above offers the important advantages that by mere substitution for the existing timing pulley, the described assembly can convert an existing engine into one benefiting from variable valve timing. The space requirements of the assembly are little different from those for a conventional timing pulley and the whole phase change mechanism, complete with its actuating system, does not add to the overall length of the engine.

A high ratio reduction gearbox is available under the name CYCLO which generally resembles the construction described above. The housing of the gearbox has rollers mounted on posts arranged evenly around a circle centred on the axis of the input and output shafts, thereby defining the equivalent of an internally toothed gear. Two externally toothed gears, formed by profiled disks each defining on its circumference a number of rounded teeth which is less than the number of rollers in the housing, are mounted on two eccentrics driven by the input shaft and engage between with the rollers and transmit torque from the housing to the camshaft through pins which pass through holes in the disks. If the input shaft is rotated the disks follow a trochoidal path in which they constantly remain in mesh with the rollers and by rotating about their own centre as they follow the movement of the eccentrics on the input shaft.

The CYCLO gearbox has the advantage of being well balanced by virtue of there being two eccentrics. Also, because the output pins are engaged by the profiled disks from opposite sides, there is negligible backlash in the gearbox.

## Claims

1. A phase change mechanism which comprises concentric drive (18) and driven (14) members, and two gears (22,24) the first being an internally toothed gear ring (22) and the second

4

being an externally toothed gear (24) of smaller diameter but having teeth of the same pitch as the teeth of the first gear which mesh with the internal teeth of the first gear (22) over only part of the circumference of the second gear (24), each of the gears (22,24) being coupled for rotation with a respective one of the drive (18) and driven (14) members, one of the gears (22) being mounted for rotation about the same axis as the drive and driven members (18,14) and the other (24) being journalled for rotation about an eccentric crank (26) serving as the actuating member, rotation of the crank (26) being effective to cause trochoidal movement of the gear (24) journalled thereon relative to the other gear (22) so as to bring about a phase shift between the drive and driven members (18,14).

2. A phase change mechanism as claimed in Claim 1, wherein the ring gear is mounted for concentric rotation with the drive member and the second gear is coupled to the driven member by a slider block which permits some radial misalignment of the axis of the second gear relative to the axis of the driven member while ensuring that the second gear and the driven member rotate in unison.

3. A phase change mechanism as claimed in Claim 1 or Claim 2, wherein the drive member is journalled on the driven member.

4. A phase change mechanism as claimed in Claim 3, wherein the drive member and the driven member together define a sealed enclosure housing the elements of the differential gearing coupling the drive member to the driven member.

5. A phase shift mechanism as claimed in any preceding claim, wherein an angular position sensor is provided for determining the relative phase between the drive and the driven members.

6. A phase change mechanism as claimed in any preceding claim, wherein the actuating system for the phase change mechanism comprises a reaction member coupled to the actuator and braking means for resisting rotation of the reaction member.

EP 0 365 338 A1

# FIG.1

# FIG.2.

# FIG.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-234853 (CLEMSON) <br> * column 13, line 24 - column 15, line 30; figures 1-6 * <br> --- | 1 | F01L1/34 <br> F16D3/10 <br> F16H1/32 |
| A | FR-A-2550298 (HEINZ JUNG) <br> * page 7, line 18 - page 8, line 8; figures 1, 2 * <br> --- | 1 | |
| A | BE-A-412148 (SHIRSHOV) <br> * page 3, line 23 - page 4, line 14; figures 1, 2 * <br> ----- | 1 | |

| TECHNICAL FIELDS SEARCHED (Int. Cl.5 ) |
|---|
| F01L <br> F16D <br> F16H |

The present search report has been drawn up for all claims

| Place of search | Date of completion of the search | Examiner |
|---|---|---|
| THE HAGUE | 25 JANUARY 1990 | LEFEBVRE L.J.F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

        ................................................................

& : member of the same patent family, corresponding document

EPO FORM 1503 03.82 (P0401)